# EUROPÄISCHE PATENTSCHRIFT

(11) **EP 0 459 194 B1**
(45) Veröffentlichungstag und Bekanntmachung des Hinweises auf die Patenterteilung: **12.01.1994**
(21) Anmeldenummer: 91107577.8
(22) Anmeldetag: 10.05.1991
(51) Int. Cl.: C02F 11/00, C02F 11/12, C02F 11/06

(54) **Verfahren zur thermischen Entsorgung von Klärschlämmen**
Process for the thermal disposal of sludge
Procédé d'élimination thermique de boues de décantation

(30) Priorität: 22.05.1990 DE 4016468
(43) Veröffentlichungstag der Anmeldung: 04.12.1991
(73) Patentinhaber: PASSAVANT-WERKE AG, 65322 Aarbergen 7 (DE)
(72) Erfinder: Coenen, Hubert, Dr., W-6209 Aarbergen 2 (DE); Hubert, Helmut, Dr., W-6200 Wiesbaden (DE); Bultmann, Friedhelm, W-6209 Aarbergen 2 (DE); Brunner, Matthias, Dr., W-6209 Hohenstein-Unterdorf (DE)

(56) Entgegenhaltungen:
- EP-A- 0 390 131
- WO-A-90/12249
- DE-A- 1 551 863
- DE-A- 3 840 858
- FR-A- 2 348 724
- US-A- 4 321 151

## Beschreibung

Die Erfindung bezieht sich auf ein Verfahren zur thermischen Entsorgung von Klärschlämmen aller Art.

In der Bundesrepublik fallen bei der Abwasserreinigung z.Z. ca. 50 Mio t pro Jahr Klärschlamm an. Diese Mengenangabe bezieht sich auf Klärschlamm mit 5 % Trockensubtanzgehalt und 95 % Wasser. Der Anfall an Trockensubstanz beläuft sich somit auf rd. 2,5 Mio t/a. Diese Trockensubstanzen sind zu je 50 % kommunalen und industriellen Klärschlämmen zuzuordnen.

Bis vor etwa 10 Jahren sind die Klärschlämme problemlos durch Ausbringen auf land- bzw. fortwirtschaftliche Flächen entsorgt worden. Auf Grund ihres hohen Kali-, Stickstoff- und Phosphorgehaltes stellten sie ein wertvolles und zudem billiges Düngemittel dar. Sowohl ihre häufig beachtlichen Gehalte an Schwermetallen, als auch die Befürchtung, daß Klärschlämme je nach Herkunft mit polychlorierten Biphenylen und Dioxinen kontaminiert sein könnten, haben die Klärschlämme als Düngemittel stark in Verruf gebracht und ihre Aufbringung verhindert.

Mit dem Aufkommen dieser Problematik und auf dem Höhepunkt der Ölkrise Ende der siebziger Jahre begann man nach Wegen zu suchen, Klärschlämme stoffwirtschaftlich und energetisch in Form von Verbrennung zu nutzen. Gleichzeitig hat man die geordnete Ablagerung auf Deponien betrieben. Vor dem Hintergrund dieser Bestrebungen stellt sich die Klärschlammentsorgung in der Bundesrepublik zur Zeit wie folgt dar:
- 59 % werden deponiert,
- 29 % werden land- und forstwirtschaftlich genutzt,
- 9 % werden kompostiert.

In letzten Zeit wird es immer schwieriger und kostspieliger Klärschlämme in der Nähe von Ballungsgebieten zu deponieren. Es fehlt an geeigneten Standorten. Deshalb nimmt der Anteil der Verbrennung immer stärker zu. Aber auch gegen Verbrennung erheben sich Widerstände, und zwar wegen der vorgenannten Kontaminierung der Abgase mit Dioxin und anderen als krebserregend verdächtigten Verbindungen.

Ein Nachteil der bisher entwickelten Verbrennungs-Verfahren besteht darin, daß die Aschen und vor allen Dingen die Filterstäube wegen möglicher Kontamination mit Problemstoffen, wie z.B. Schwermetallen, und aus einer ungenügenden Verbrennung herrührender Verschleppung von halogenierten zyklischen Kohlenwasserstoffen als Sonderabfälle gelten und damit alle Probleme einer Sonderabfalldeponierung bzw. - entsorgung mit sich bringen.

Alle bisher entwickelten Verfahren zur thermischen Klärschlammentsorgung weisen im Verfahrensgang die folgenden Einzelschritte auf:
- Eindickung;
- Entwässerung;
- Trocknung;
- Verbrennung;
- Abgasbehandlung;
- Reststoffentsorgung;

Für diese Einzelschritte stehen verschiedene bewährte Komponenten zur Verfügung.

So erfolgt z.B. die Entwässerung über Filterpressen, Siebbandpressen oder Zentrifugen nach vorangegangener Flockung und Eindickung.

Für die Trocknung verwendet man Drehrohröfen, Etagenöfen, Wirbelbettöfen, Mahltrockner oder indirekte Trockner unterschiedlicher Bauarten. Die Verbrennung erfolgt entweder in Kombination mit der Trocknung direkt in den Etagenöfen oder aber getrennt von der Trocknung in nachgeschalteten Wirbelbettöfen, Staubbrennern oder Öfen mit Schmelzkammerfeuerung. Die Abgase werden gegebenenfalls mit Nachverbrennung in Elektrofiltern und Wäschern behandelt.

Mit der nachfolgend geschilderten Erfindung soll ein Verfahren zur Verfügung gestellt werden, das die Verschleppung problematischer Abgasinhaltsstoffe vermeidet und die anfallenden Reststoffe, insbesondere die Aschen und Filterstäube, in einen solchen Zustand versetzt, daß sie als Wertstoffe, z.B. Bauzuschlagstoffe problemlos wiederverwendet werden können. Auch in energetischer Hinsicht soll insbesondere durch Wärmerückgewinnung eine Optimierung erzielt werden.

Diese Aufgabe wird gemäß der Erfindung dadurch gelöst, daß die bei der Verbrennung anfallenden Aschen und Abgasstäube und die bei der Rauchgaswäsche anfallenden, kontaminierten Schlämme gemeinsam einer Hochtemperaturverbrennung mit Einschmelzung der Feststoffe unterworfen werden. Es hat sich gezeigt, daß sich Schwermetalle, Dioxine und Furane außer in der Asche auch an den Flugstäuben der Asche anlagern. Diese Eigenschaft macht es möglich, beim Einschmelzen der Gesamtasche die Schwermetalle (mit Ausnahme des Quecksilbers) in die Schmelze einzubinden. Die Schmelztemperaturen (größer 1200°) machen es gleichzeitig möglich, die Dioxine und Furane thermisch in unschädliche Verbindungen zu brechen, wobei besonderen Wert auf ausreichende Verweilzeit und damit auf die Entsorgungssicherheit gelegt wird. Die Ascheschmelze wird vorzugsweise in einem nachgeschalteten Wasserbad unter Granulatbildung abgekühlt und dann zur Verladung in einem Speicher zwischengelagert. Für die Erzielung der hohen Schmelztemperaturen kann ein Lichtbogenofen oder ein Plasmabrennerofen verwendet werden. Die bei der Abkühlung anfallenden Brüden werden in einem Kondensator rückgekühlt. Die dabei wiedergewonnene Wärme kann zur Faulraumheizung verwendet werden.

Die aus der Ascheschmelze austretenden Rauchgase enthalten noch größere Mengen an Quecksilber. Sie werden deshalb einer mindestens einstufigen Rauchgaswäsche unterzogen, wobei bei zweistufiger Arbeitsweise die Waschwässer der ersten Stufe sauer und der zweiten Stufe alkalisch gehalten werden. Die Wäschwässer können nach Passieren einer Absetzstufe, in der das elementare Quecksilber anfällt und ausgeschleust werden kann, einer gesonderten Abwasserreinigung unterzogen werden.

Die Rauchgase der Niedertemperatur-Verbrennungsstufe werden nach der Gaswäsche erfindungsgemäß Aktivkohlefiltern aufgegeben, in denen der Rest der Feinstäube und Halogenorgane zurückgehalten werden. Die bei der thermischen Regenerierung der Aktivkohle anfallenden Abgase werden erfindungsgemäß anschließend der Hochtemperaturverbrennung zugeführt, so daß auch diese Inhaltsstoffe in unschädliche Verbindungen gebrochen werden.

Die Erfindung wird nachfolgend anhand einer zur Durchführung des Verfahrens geeigneten Anlage ausführlich beschrieben.

Der z.B. in einer Kammerfilterpresse bis auf einen Feststoffgehalt von bis zu 25 % entwässerte Klärschlamm gelangt zunächst in einen als Kastenbeschicker 1 ausgebildeten Zwischenspeicher.

Dieser Kastenbeschicker, ausgebildet als Trogkettenförderer mit Kastenaufbau, bietet gleichzeitig einen geregelten Abzug des Filterkuchens und bestimmt damit die Durchsatzleistung der Anlage. Angeordnet ist der Kastenbeschicker oberhalb des Etagenofens 3.

Die dem Kastenbeschicker nachgeschaltete Fördereinrichtung 2 bietet die Möglichkeit, den Filterkuchen unter Umgehung des Trockners 4 dem Ofen 3 direkt zuzufördern.

Der verfahrensgerechte Weg geht über den Doppelwellenmischer 6. Unter Beimischung von auf ca. 95 % TS getrockneten Material 7 wird hier der für die Verbrennung gewünschte TS-Gehalt eingestellt. Mit der Beimischung von getrocknetem Material 7 wird die Leimphase übersprungen und damit der Trocknerbetrieb sichergestellt.

Im indirekt mit Thermalöl 8 beheiztem Scheibentrockner 4 wird nur soviel Filterkuchen getrocknet, wie der gewünschten Ofenleistung entspricht.

Das Thermalöl wird in dem dem Ofen 3 nachgeschalteten zweiten Rauchgas-Rekuperator 11 aufgeheizt. Evtl. überschüssige Wärme im Thermalölkreislauf 8 wird im Rückkühler 12 abgeführt. In der im Fließschema dargestellten Version werden die Trocknerbrüden 9 gemeinsam mit dem Abgas-Brüdengemisch 16 und der Verbrennungsluft 13 über den ersten Rekuperator 14 dem Unterofen 15 zugeführt. Das Gemisch wird im ersten Rekuperator 14 von den Rauchgasen 17 des Etagenofens 3 aufgeheizt.

Für die Verbrennung des Filterkuchens besitzt der Etagenofen eine integrierte Nachverbrennungsstufe (Unterofen 15). Die oberen Etagen des Ofens dienen der weiteren Filterkuchenvortrocknung und die unteren Etagen der Verbrennung und Aschekühlung.

Alternativ zum Etagenofen kann auch ein Wirbelschichtofen eingesetzt werden. Die in dem ersten Rekuperator 14 erwärmten Brüden 9 des Trockners 4 werden in den Unterofen eingeleitet und kühlen dort die Asche. Durch Freisetzen der im Filterkuchen gebundenen Wärme erfolgt der Temperatursprung der Rauchgase 17 auf ca. 900° C.

Als Verbrennungsluft dient die zur Kühlung der Hohlwelle 18 und Rührarme 19 erforderliche Kühlluft 20. Die Kühlluft (21) verläßt mit ca. 160° die Hohlwelle und wird gemeinsam mit dem vorstehend genannten Abgas-Brüdengemisch über den ersten Rekuperator 14 dem Unterofen zugeführt.

Soweit für die Veraschung eine Stützfeuerung, d.h. Wärmezufuhr erforderlich ist, wird diese durch Gas-Gebläse-Brenner in der Verbrennungszone zugeführt. Das Zu- und Abschalten sowie die Leistungsregelung erfolgen automatisch in Abhängigkeit von der Solltemperatur.

Zur optimalen Anpassung an die Erfordernisse des Verbrennungsprozesses ist ein regelbarer Krählwerksantrieb vorgesehen.

Die im Etagenofen 3 anfallende Asche wird über einen Fallschacht 22 und Förderschnecke 23 ausgetragen und mittels Becherwerk 24 in das Aschesilo 25 befördert.

Die Abgase 17 verlassen den Etagenofen 3 aus der Brennzone mit ca. 900° C und dienen in den nachgeschalteten Rekuperatoren 11, 14 der Mischluft- und Thermalölerwärmung. Dabei kühlen sich die Abgase auf ca. 260° C ab.

Zuvor wird durch Eindüsen von Ammoniak 26 in die Brennzone eine Reduzierung von Stickoxiden eingeleitet.

Die mit dem Rauchgas 17 aus dem Etagenofen 3 ausgetragene Flugasche 27 wird zum geringeren Teil in den Rekuperatoren 11, 14 und zum größeren Teil im nachtgeschalteten Zyklon 28 und E-Filter 29 abgeschieden. Von hier wird die Asche über Zellenradschleusen 30, 31 und Sammelschnecken 23 dem Becherwerk 24 und Aschesilo 25 zugeführt.

Neben dar Entstaubung der Abgase im Rekuperator 11, 14, Absorber 28 und E-Filter 29 erfolgt eine weitergehende Abgasreinigung in einer zweistufigen Rauchgaswäsche 32, 33. Neben der Abkühlung der Abgase von ca. 260° C auf ca. 60 - 80° C besteht die Hauptaufgabe der Rauchgaswäsche vor allem in der Abscheidung von Schadstoffen. In den sauer (32) bzw. alkalisch (33) betriebenen Wäschern werden Schwermetalle und Schadgase, z.B. HCl, S02 und Quecksilber, abgeschieden.

Die Wäscher arbeiten intern im Kreislauf mit Nachklärwasser. Das sich mit Asche, Hydroxiden und Salzen aufkonzentrierende Wasser wird einem, Neutralisationsbehälter 34 zugeführt und von dort kontinuierlich in eine Abwasserbehandlung 35 eingeleitet. Das Quecksilber setzt sich am Boden der Wäscherbehälter 36, 37 ab und wird dort chargenweise in spezielle Sammelbehälter abgelassen.

Die die Wäscher verlassenden, auf unter Taupunkttemperatur abgekühlten und gesättigten Abgase 38 werden in einem zwischen E-Filter und Wäschern angeordneten Wärmetauscher 39 auf über 120° C aufgeheizt.

Dem Wärmetauscher ist ein Saugzuggebläse 42 nachgeschaltet, das für die Überwindung der Anlagewiderstände sorgt und die Abgase über ein Aktivkohlefilter 40 in den Kamin 41 drückt.

Mit dem Einsatz eines Aktivkohlefilters 40 wird der Forderung nach weitgehender Begrenzung von Dioxin- und Furanverbindungen entsprochen. Die beladene Aktivkohle kann über den Etagenofen 3 entsorgt werden. Sofern die Aktivkohle thermisch regeneriert werden soll, werden die dabei anfallenden Abgase der nachfolgend geschilderten Hochtemperatur-Verbrennung aufgegeben.

Die in dem Silo 25 gesammelten Aschen und Aschestäube werden über eine Dosierschnecke 42 einem Schmelzofen 43 aufgegeben. Als Schmelzöfen 43 können hierbei Lichtbogenöfen oder Öfen mit Plasmabrenner eingesetzt werden. Beim Einschmelzen der Gesamtasche werden die Schwermetalle (mit Ausnahme von Quecksilber) in die Schmelze eingebunden. Durch die hohe Schmelztemperatur (größer 1200° C) ist es gleichzeitig möglich, die Dioxine und Furane thermisch zu brechen.

Die Ascheschmelze wird in einem nachgeschalteten Wasserbad 44 unter Granulatbildung abgekühlt und das Produkt 45 zur Verladung in einem Zwischenspeicher 46 gelagert.

Die bei der Abkühlung des Granulats anfallende Wärme führt zur Brüdenbildung. Über einen Kondensatkühler 50 kann diese Wärme rückgewonnen und zur Faulturmbeheizung genutzt werden.

Die Abgase des Schmelzofens 43 werden nochmals einer zweistufigen Wäsche 47, 48 unterzogen. Deren Abwässer 49 können in derselben Kläranlage gereinigt werden, in der die Waschwässer der Rauchgaswäsche 32, 33 entsorgt werden. Auch hier fallen Restmengen an Quecksilber an, die unten ausgeschleust werden können.

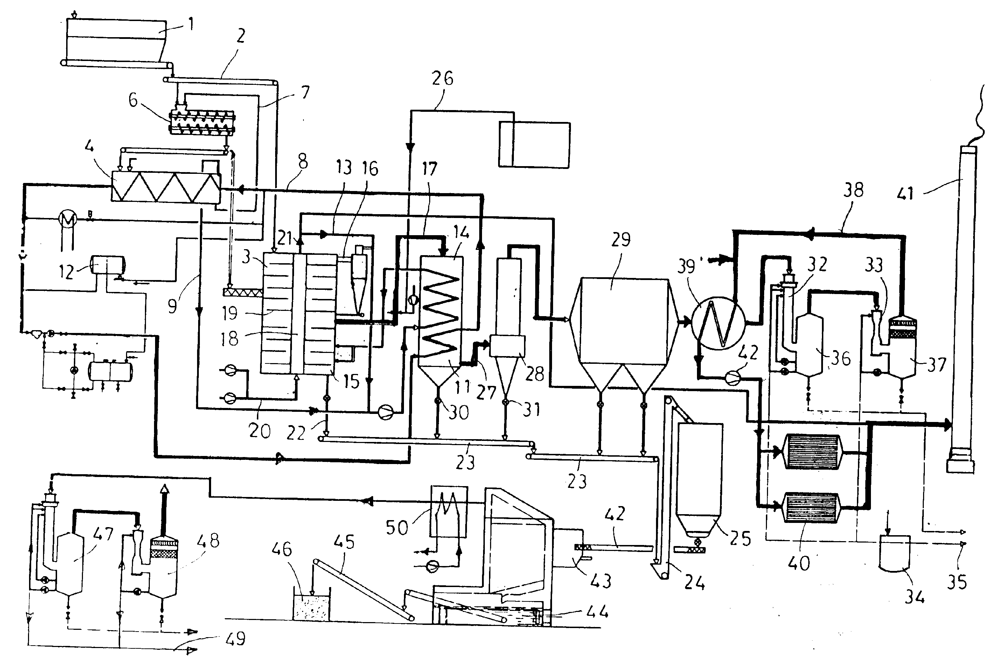

## Patentansprüche

1. Verfahren zur thermischen Entsorgung von Klärschlämmen durch Trocknung, Verbrennung und Rauchgasentstaubung, wobei die bei der Verbrennung anfallenden Aschen und Äbgasstäube einer Hochtemperaturverbrennung mit Einschmelzung der Feststoffe unterworfen werden **dadurch gekennzeichnet**, daß die in der Schlammverbrennung anfallenden Rauchgase nach der Entstaubung einer Gaswäsche, die hierbei anfallenden Waschwässer einer Abwasserbehandlung unterworfen und die dabei anfallenden, kontaminierten Schlämme in die Hochtemperaturverbrennung mit Einschmelzung der Feststoffe gegeben werden.

2. Verfahren nach Anspruch 1, **dadurch** **gekennzeichnet**, daß das in der Einschmelzstufe anfallende Rauchgas einer mindestens einstufigen Gaswäsche unterworfen wird.

3. Verfahren nach Anspruch 2, **dadurch** **gekennzeichnet**, daß die in der Gaswäsche anfallenden Waschwässer einer gesonderten Abwasserbehandlung unterzogen werden.

4. Verfahren nach Anspruch 2 oder 3, **dadurch** **gekennzeichnet**, daß der Gaswäsche eine Ausschleusstufe für Schwermetalle aus den Waschwässern nachgeschaltet ist.

5. Verfahren nach Anspruch 1 bis 7, **dadurch** **gekennzeichnet**, daß die Schwermetalle aus der der Rauchgaswäsche der Verbrennungsstufe nachgeschalteten Abwasserbehandlung ausgeschleust werden.

6. Verfahren nach Anspruch 5, **dadurch** **gekennzeichnet**, daß die Rauchgaswäsche zweistufig ist, wobei in der ersten sauren Stufe Schwermetalle und ihnen gegebenenfalls anhaftende Schadstoffe und in der zweiten alkalischen Stufe saure Gasinhaltsstoffe ausgewaschen werden.

7. Verfahren nach Anspruch 5 oder 6, **dadurch** **gekennzeichnet,** daß die gewaschenen Rauchgase noch einem Aktivkohlefilter zugeführt werden.

8. Verfahren nach Anspruch 7, **dadurch** **gekennzeichnet**, daß die Aktivkohle thermisch regeneriert wird und daß die bei dieser Regenerierung anfallenden Abgase der Einschmelzeinrichtung zugeführt werden.

9. Verfahren nach einem oder mehreren der vorstehenden Ansprüche, **dadurch gekennzeichnet**, daß die Trocknung des entwässerten Schlamms unter Zumischung bereits getrockneten Schlamms vorgenommen wird.

## Claims

1. Procedure for thermal disposal of sewage sludge by drying, incineratiori and flue gas dedusting where ashes and flue gas forming during the incineration process are subject to a high-temperature incineration with melting of solids **characterized in that** the flue gases which form during sludge incineration are washed in a flue gas scrubber subsequently to their dedusting, the washing water thereof is subject to a waste water treatment and the accumulating contaminated sludges are disposed of by high-temperature incineration with melting of solids.

2. Procedure according to claim 1, **characterized** **in that** the flue gases which form during the melting process are treated at least in a one-stage flue gas scrubber.

3. Procedure according to claim 2, **characterized** **in that** the washing water from the flue gas scrubber is subject to a separate waste water treatment.

4. Procedure according to claim 2 or 3, **characte****rized in that** the flue gas scrubber is followed by discharge unit for heavy metals from the washing water.

5. Procedure according to claim 1 to 7, **characte****rized in that** the heavy metals from the waste water treatnient following the scrubbing of the flue gases from the incineration process are discharged.

6. Procedure according to claim 5, **characterized** **in that** a two-stage flue gas scrubber is used where in the first acidified stage heavy metals and eventually adhered harmful substances and in the second alkaline stage acid gas constituents are washed out.

7. Procedure according to claim 5 or 6, **characte****rized in that** the washed flue gases are subsequently fed to an activated carbon filter.

8. Procedure according to claim 7, **characterized** **in that** the activated carbon is regenerated thermally and the forming flue gases are introduced into the melting furnace.

9. Procedure according to one or several above claims, **characterized in that** the dewatered sludge is mixed for drying with already dry sludge.

## Revendications

1. Procédé d'élimination thermique des boues d'épuration par séchage, incinération et dépoussiérage de gaz de fumée où les cendres et gaz de fumée provenant de l'incinération seront soumis à une combustion à haute température avec fusion de matières solides, **caractérisé en** **ce que** les gaz de fumée se produisant lors de l'incinération des boues seront dépoussiérés et, ensuite, traités dans un épurateur de gaz, les eaux de lavage en résultant seront soumises à un traitement des eaux usées et les boues contaminées s'en accumulant seront alimentées à un four à haute température avec fusion de matières solides.

2. Procédé selon la revendication 1, **caractérisé** **en ce que** les gaz de fumée se produisant lors de la combustion avec fusion seront traités au moins dans un épurateur de gaz à un seul étage.

3. Procédé selon la revendication 2, **caractérisé** **en** **ce que** les eaux de lavage de l'épuration de gaz seront soumises à un traitement des eaux usées séparé.

4. Procédé selon l'une quelconque des revendications 2 et 3, **caractérisé en** **ce que** l'épurateur de gaz est suivi par une unité d'évacuation de métaux lourds renfermés dans les eaux de lavage.

5. Procédé selon l'une quelconque des revendications 1 à 7, **caractérisé en ce que** les métaux lourds seront évacués après le traitement des eaux usees lequel suit au stades d'incinération et d'épuration de gaz.

6. Procédé selon la revendication 5, **caractérisé** **en ce que** l'épurateur de gaz utilisé comporte deux étages où dans la premiere étage à réaction acide les métaux lourds et des substances nocives éventuellement adhérées et dans la deuxième étage à réaction alcaline les composants acides de gaz seront enlevés.

7. Procédé selon l'une quelconque des revendications 5 et 6, **caractérisé en ce que** les gaz de fumée lavés seront alimentés à un filtre à charbon actif.

8. Procédé selon la revendication 7, **caractérisé** **en ce que** le charbon actif sera régénéré thermiquement et les effluents gazeux se produisant lors de cette régénération seront alimentés au four de fusion.

9. Procédé selon l'une quelconque des revendications citées ci-avant, **caractérisé en** **ce que** les boues déshydratées seront mélangées pour le séchage avec des boues déjà sèches.
